# EUROPÄISCHE PATENTANMELDUNG

(11) **EP 1 437 510 A1**
(43) Veröffentlichungstag der Anmeldung: **14.07.2004**
(21) Anmeldenummer: 03025135.9
(22) Anmeldetag: 03.11.2003
(51) Int. Cl.: F04C 15/00, F04C 2/16

(54) **Zahnradpumpe, insbesondere Hochdruck-Zahnradpumpe für einen Extruder**

(30) Priorität: 09.01.2003 DE 10300407; 06.02.2003 DE 10304697
(71) Anmelder: Berstorff GmbH, 30625 Hannover (DE)
(72) Erfinder: Uphus, Reinhard, Dr., 30419 Hannover (DE)
(74) Vertreter: Zollner, Richard

(57) **Zusammenfassung**

Die Erfindung betrifft eine Zahnradpumpe, insbesondere für einen Extruder, mit zwei parallelen Förderwellen (2, 3), die sich kämmende Pfeilzahnräder (7, 8) aufweisen, zwischen denen Material förderbar ist.

Erfindungsgemäß wird auch bei hohen Drücken ein sicherer, verschleißarmer und materialschonender Betrieb gewährleistet, indem
die Pfeilzahnräder (7, 8) in Umfangsrichtung umlaufende, auf den Betriebswälzkreisdurchmessern liegende, aneinander abwälzende Stege (9, 10) aufweisen, und
Gegenlager (18, 19) vorgesehen sind, die an den Stegen (9, 10) anliegen und die Förderwellen (2, 3) gegen einen Ausgangsdruck abstützen.

## Beschreibung

Die Erfindung betrifft eine Zahnradpumpe, insbesondere Hochdruck-Zahnradpumpe gemäß dem Oberbegriff von Anspruch 1.

Eine derartige Zahnradpumpe ist in der DE 100 34 998 A1 sowie der DE 197 03 798 C2 gezeigt. Die Zahnradpumpe ist hierbei als Endstufe hinter einem Extruder angeordnet, nimmt das von dem Extruder geförderte Material auf und gibt es mit hohem Ausgangsdruck aus.

Die im Allgemeinen spurkorrigierten Pfeilverzahnungen greifen von ihren axial äußeren Bereichen her ineinander und drücken das zu fördernde plastifizierte Material in den mittleren Bereich, d. h. in die Pfeilspitzenenden der Zahnlücken. Hierbei wird das Material hoch belastet, insbesondere thermisch belastet, so dass Materialbeeinträchtigungen, insbesondere durch Verbrennung, Zersetzung und Vulkanisierung, auftreten können. Die Pumpe ist entsprechend mechanisch belastet.

Durch die Erhöhung des Ausgangsdrucks gegenüber dem von dem Extruder erzeugten Eingangsdruck wirken auf die beiden Förderwellen Kräfte senkrecht zu ihren Achsen entgegen der Förderrichtung. Da die Lager der Welle zur Vermeidung von Ablagerungen mit hinreichendem axialen Abstand von dem Gehäuse der Zahnradpumpe angeordnet sind, führen die auftretenden Biegemomente zu einer erheblichen Durchbiegung der Förderwellen im Bereich der Zahnräder, wodurch der Verschleiß erhöht ist. Somit ist insbesondere bei mechanischen Lagern der Betriebsdruck begrenzt.

Der Erfindung liegt die Aufgabe zugrunde, eine Zahnradpumpe zu schaffen, die auch bei hohen Drücken einen sicheren, verschleißarmen und materialschonenden Betrieb gewährleistet.

Diese Aufgabe wird durch eine Zahnradpumpe nach Anspruch 1 gelöst. Die Unteransprüche beschreiben bevorzugte Weiterbildungen.

Der Erfindung liegt der Gedanke zugrunde, die bei höheren Drücken auftretenden Biegemomente durch geeignete Abstützungen im Bereich der Zahnräder abzufangen. Hierzu ist an jedem Zahnrad ein Steg ausgebildet, an dem ein Gegenlager anliegt. Das Gegenlager kann insbesondere eine an dem Steg abrollende, druckbeaufschlagte Rolle aufweisen. Somit kann ein höherer Betriebsdruck eingestellt werden und auch bei mechanischen Lagern ein geringer Verschleiß gewährleistet werden.

Die Stege liegen erfindungsgemäß jeweils auf dem Betriebswälzkreisdurchmesser der beiden Zahnräder und wälzen somit aufeinander ohne Schlupf und ohne wesentlichen Materialdurchtritt ab. Durch die Stege sind in den Pfeilspitzen der pfeilförmigen Zähne Vertiefungen ausgebildet, in denen sich das bei Eingriff der Zähne aus den Zahnlücken herausgedrückte Material sammeln kann. Somit wird bei dem Eingriff der Pfeilverzahnungen von außen nach innen das Material zum Teil in die Vertiefungen der Zähne oberhalb des Steges gedrückt. Durch die Materialförderung von den Zahnlücken in die Vertiefungen der Zähne wird lediglich eine Homogenisierung des Materials erreicht; die bei herkömmlichen Zahnradpumpen auftretende starke Kompression und Beanspruchung des Materials in den Pfeilspitzen der Zahnlücken wird weitgehend vermieden.

Durch die Ausbildung der Stege ist zudem die Herstellung der Zahnräder - die nunmehr Doppel-Schrägzahnräder mit einem mittleren Steg darstellen - vereinfacht, ohne dass die Pumpleistung nennenswert beeinträchtigt ist.

Vorteilhafterweise kann die Druckbeaufschlagung der Gegenlager in Abhängigkeit von dem Ausgangsdruck, ggf. auch dem Differenzdruck aus Ausgangs- und Eingangsdruck, erfolgen, so dass die durch die Zahnradpumpe bewirkte Druckerhöhung sehr genau ausgeglichen werden kann. Hierzu können entsprechend Sensoren im Ausgangsbereich und ggf. Eingangsbereich vorgesehen sein.

Die Erfindung wird im Folgenden anhand der beiliegenden Zeichnungen an einer Ausführungsform näher erläutert. Es zeigen:

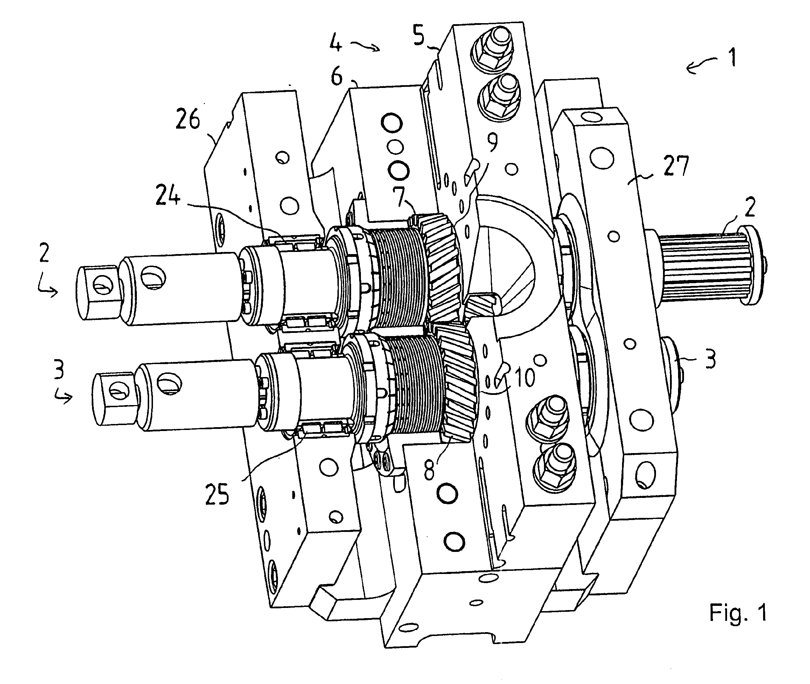

- Fig. 1: eine erfindungsgemäße Zahnradpumpe mit teilweise gebrochener Darstellung des Gehäuses;

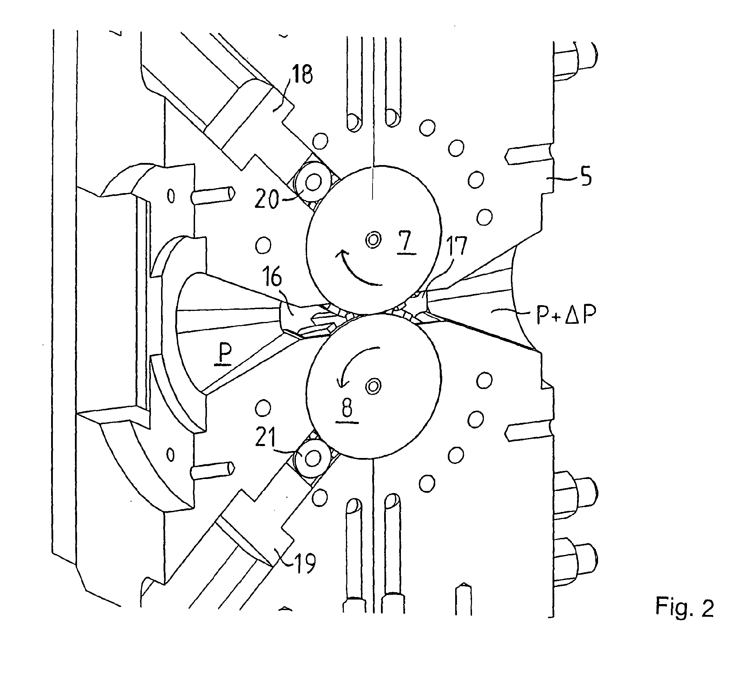

- Fig. 2: einen Radialschnitt der Zahnradpumpe aus Fig. 1 durch die Stegebene;

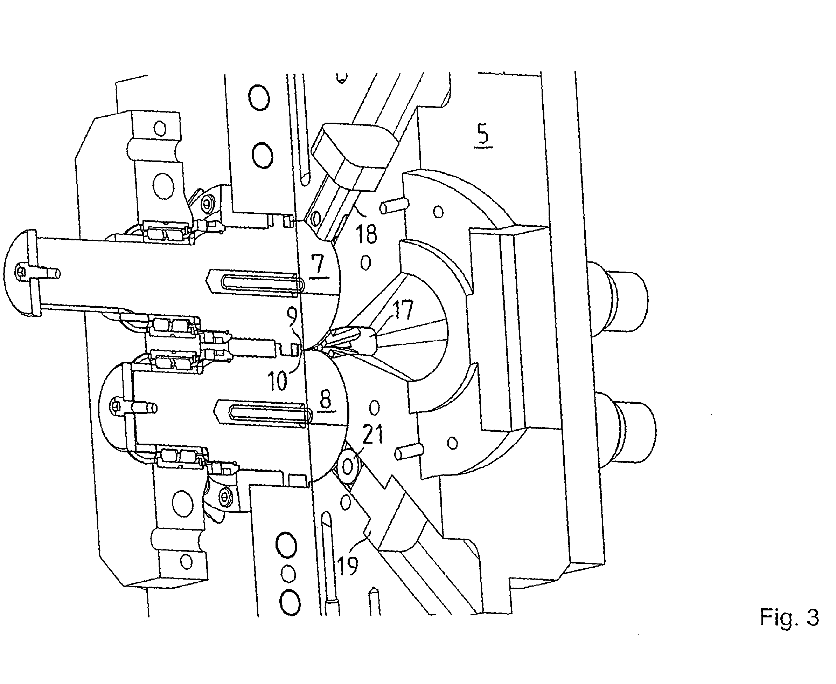

- Fig. 3: einen Axialschnitt bzw. Knickschnitt der Zahnradpumpe aus Fig. 1, 2;
- Fig. 4: eine Gehäusehälfte der Zahnradpumpe aus Fig. 3 ohne Förderwellen;

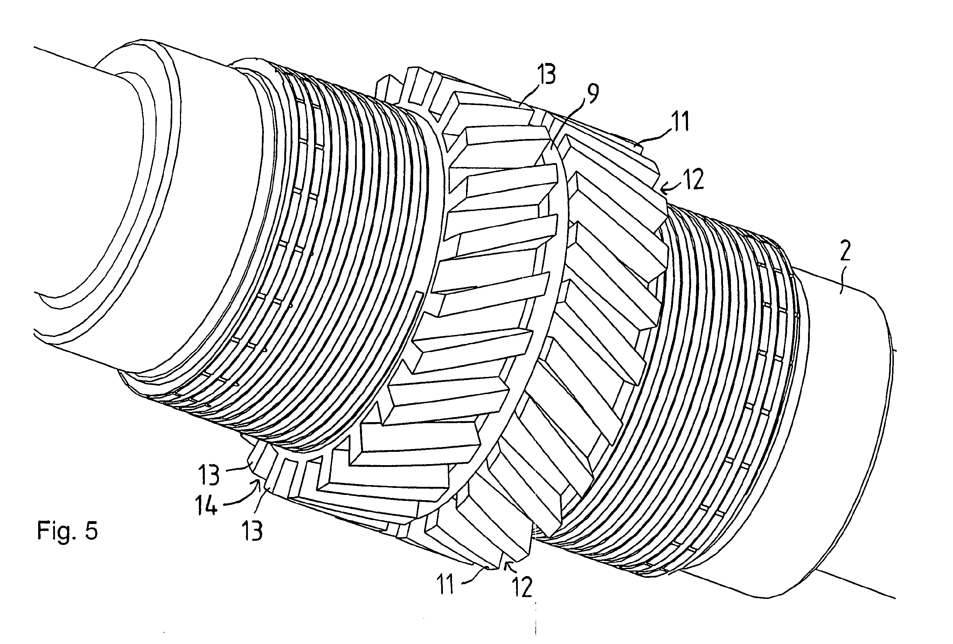

- Fig. 5: eine perspektivische Darstellung einer Förderwelle.

Eine Zahnradpumpe 1 weist zwei parallele, gegensinnig drehende Förderwellen 2, 3 auf, die in einem Gehäuse 4 mit Gehäusehälften 5, 6 aufgenommen sind. Die Förderwellen 2, 3 weisen in ihren mittleren Bereich sich kämmende Pfeilzahnräder 7, 8 auf. In einem mittleren Bereich jedes Pfeilzahnrades 7, 8 ist ein Steg 9 bzw. 10 auf dem Betriebswälzkreisdurchmesser des Zahnrades mit zylindrischer Außenfläche ausgefräst, so dass die Stege 9, 10 der sich kämmenden Pfeilzahnräder 7, 8 aufeinander abwälzen. Die Stege 9, 10 sind somit auf einer mittleren Höhe zwischen den Zahnköpfen der Zähne 11, 13 und den Zahnlücken 12, 14 ausgebildet.

Die Förderwellen 2, 3 sind in Lagern 24, 25 gelagert, die in Lagerblöcken 26, 27 aufgenommen sind. Die Lagerblöcke 26, 27 sind in axialer Richtung von dem Gehäuse 4 beabstandet, damit die Lager nicht von aus dem Gehäuse 4 in axialer Richtung austretendem Material verschmutzt werden. Hierdurch ergibt sich ein relativ großer axialer Abstand zwischen den Lagern jeder Förderwelle 2, 3.

Von einem Extruder wird plastifiziertes Material mit einem Eingabedruck p in einen Eingaberaum 16 bzw. Eingabespalt zwischen den Zahnrädern 7, 8 eingegeben und von den Zahnrädern 7, 8 mit einem Ausgabedruck p + Δp in einen Ausgaberaum 17 ausgegeben, in den ein Spritzkopf aufgenommen werden kann.

Dem Ausgaberaum 17 gegenüberliegend sind Gegenlager 18, 19 vorgesehen, die an den Stegen 9, 10 abwälzende Rollen 20, 21 aufweisen. Die im Ausgaberaum 17 aufgebaute, auf die Zahnräder 7, 8 einwirkende Druckerhöhung Δp wird von den Gegenlagern 18, 19 abgefangen, indem die Gegenlager 18, 19 z. B. mechanisch oder hydraulisch einen Gegendruck aufbauen, der die Druckerhöhung Δp kompensiert. Zur Ermittlung des Gegendruckes kann im Ausgaberaum 17 und ergänzend auch im Eingaberaum 16 ein Drucksensor vorgesehen sein.

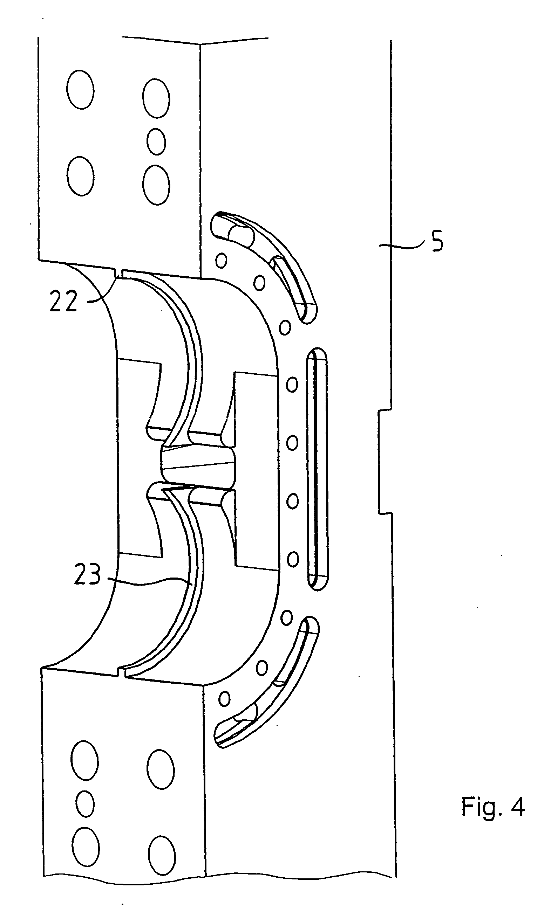

Um eine unerwünschte Förderung des Materials auf dem Steg in Umfangsrichtung um die Zahnräder 7, 8 herum zu verhindern, sind in dem Gehäuse in Fig. 4 detaillierter gezeigte Stege 22, 23 vorgesehen. Diese Stege können einteilig in dem Gehäuse 4 ausgebildet werden oder z. B. aus Metall oder einem Kunststoff hergestellt und separat in das Gehäuse 4 eingelegt werden. Die Stege 22, 23 lassen hierbei den Eingaberaum 16, Ausgaberaum 17 und die Gegenlager 18, 19 frei, um die Materialförderung und die Abwälzbewegung der Rollen 20, 21 nicht zu behindern. Sie können insbesondere lediglich in der Gehäusehälfte 5 der Ausgabeseite eingelegt sein.

## Patentansprüche

1. Zahnradpumpe, insbesondere für einen Extruder, mit zwei parallelen Förderwellen (2, 3), die sich kämmende Pfeilzahnräder (7, 8) aufweisen, zwischen denen Material förderbar ist,
**dadurch gekennzeichnet, dass**
die Pfeilzahnräder (7, 8) in Umfangsrichtung umlaufende, auf den Betriebswälzkreisdurchmessern liegende, aneinander abwälzende Stege (9, 10) aufweisen, und
Gegenlager (18, 19) vorgesehen sind, die an den Stegen (9, 10) anliegen und die Förderwellen (2, 3) gegen einen Ausgabedruck abstützen.

2. Zahnradpumpe nach Anspruch 1, **dadurch gekennzeichnet, dass** die Stege (9, 10) in der axialen Mitte der Pfeilzahnräder (7, 8) ausgebildet sind.

3. Zahnradpumpe nach Anspruch 1 oder 2, **dadurch gekennzeichnet, dass** die Gegenlager (18, 19) jeweils eine auf dem Steg (9, 10) des jeweiligen Pfeilzahnrades (7, 8) abwälzende Rolle (20, 21 ) aufweisen.

4. Zahnradpumpe nach einem der vorherigen Ansprüche, **dadurch gekennzeichnet, dass** die Gegenlager (18, 19) mit einer Gegenkraft vorgespannt sind.

5. Zahnradpumpe nach Anspruch 4, **dadurch gekennzeichnet, dass** ein Ausgabedrucksensor zur Messung eines Ausgabedruckes vorgesehen ist und die Gegenkraft in Abhängigkeit von einem von dem Ausgabedrucksensor ausgegebenen Ausgabedruck-Messsignal einstellbar ist.

6. Zahnradpumpe nach Anspruch 5, **dadurch gekennzeichnet, dass** ein Eingabedrucksensor zur Messung eines Eingabedruckes des zwischen die Pfeilzahnräder (7, 8) eingegebenen Materials vorgesehen ist und die Gegenkraft von den Gegenlagern (18, 19) in Abhängigkeit von dem Ausgabedruck-Messsignal und einem von dem Eingabedrucksensor ausgegebenen Eingabedruck-Messsignal eingestellt wird.

7. Zahnradpumpe nach einem der vorherigen Ansprüche, **dadurch gekennzeichnet, dass** die Stege (9, 10) direkt an die eine Doppel-Schrägverzahnung bildenden Zähne (11, 13) jedes Pfeilzahnrades (7, 8) angrenzen.

8. Zahnradpumpe nach Anspruch 7, **dadurch gekennzeichnet, dass** die Zahntiefe der Zähne (11, 13) zur Mitte hin abnimmt.

9. Zahnradpumpe nach einem der vorherigen Ansprüche, **dadurch gekennzeichnet, dass** die Gegenlager (18, 19) an einer dem Ausgaberaum (17) gegenüberliegenen Position am Umfang der Pfeilzahnräder (7, 8) angeordnet sind, vorzugsweise unter einem Winkel von 30° bis 60° gegen die Förderachse.

10. Zahnradpumpe nach einem der vorherigen Ansprüche, **dadurch gekennzeichnet, dass** in dem die Zahnräder (7, 8) aufnehmenden Gehäuse (4), vorzugsweise einer Gehäusehälfte (5) der Ausgabeseite, kreisbogenförmige Leisten (42, 23) ausgebildet oder aufgenommen sind, die an den Stegen (9, 10) dichtend anliegen.
